# EUROPÄISCHE PATENTSCHRIFT

(11) **EP 2 259 397 B1**
(45) Veröffentlichungstag und Bekanntmachung des Hinweises auf die Patenterteilung: **09.08.2017**
(21) Anmeldenummer: 10164691.7
(22) Anmeldetag: 02.06.2010
(51) Int. Cl.: H02B 1/06

(54) **Abdeckhaube für ein elektrisches Gerät**
Cover for electric device
Capot de recouvrement pour un appareil électrique

(30) Priorität: 05.06.2009 DE 102009024272
(43) Veröffentlichungstag der Anmeldung: 08.12.2010
(73) Patentinhaber: ABB AG, 68309 Mannheim (DE)
(72) Erfinder: Roth, Michael, 77880, Sasbach (DE)

(56) Entgegenhaltungen:
- DE-A1- 2 648 089
- DE-A1- 3 538 177
- DE-A1- 4 111 263
- US-A- 5 886 868

## Beschreibung

Die Erfindung betrifft eine Abdeckhaube für wenigstens ein elektrisches Sicherungsgerät in einer elektrischen Niederspannungsschaltanlage nach dem Oberbegriff des Anspruches 1.

Eine derartige Abdeckhaube ist beispielsweise aus der DE 41 11263 C2 bekannt geworden. Dabei befinden sich am Unterteil mehrere U-förmige Rastarme, die zur Montage in den Schlitz der Abdeckung eingerastet werden und die Längskanten des Schlitzes hintergreifen. Zur Verbindung der Abdeckhaube mit dem Unterteil ist auf einer Seite eine Scharniergelenkverbindung vorgesehen, wogegen an der entgegengesetzt liegenden Seite sowohl des Unterteils als auch des Oberteils mit Plombierlöchern versehene Vorsprünge angeformt sind. Bei einer anderen Ausführung nach der DE 41 11 263 C2 ist am Haubenoberteil ein beweglicher Haken drehbar angeordnet, der nach Aufsetzen der Abdeckhaube durch die Plombierung in Schließstellung blockiert ist.

Aufgabe der Erfindung ist es, eine Abdeckhaube noch weiter zu vereinfachen, so dass sowohl der Zusammenbau als auch die Montage vereinfacht ist.

Diese Aufgabe wird erfindungsgemäß durch die kennzeichnenden Merkmale des Anspruches 1 gelöst.

Erfindungsgemäß ist am Unterteil an der ersten und zweiten Seite je eine die Seiten überdeckende und in entgegen gesetzte Richtungen offene Nut vorgesehen, in die die Längskanten des Schlitzes im montierten Zustand wenigstens teilweise eingreifen.

Dabei ist der Abstand des Nutgrundes an der vertikal oberen Seite vom freien Rand der Nut an der vertikal unteren Seite kleiner als der Abstand der Längskanten des Schlitzes voneinander.

Dadurch wird die Montage vereinfacht, in dem das Gehäuseunterteil, kurz auch Unterteil genannt, mit der vertikal oberen Nut hinter die obere Längskante des Schlitzes eingeschoben wird, so dass die obere Längskante sich vollständig in dieser Nut befindet. Sodann wird das Unterteil gegen die untere Längskante verschwenkt, wobei es sich um die obere Längskante verdreht. Dabei gelangt der freie Rand der vertikal unten befindlichen Nut hinter die untere Längskante, so dass das Unterteil nach unten verschoben werden kann, bis die untere Längskante vollständig in der vertikal unten befindlichen Nut eingreift.

Danach wird das Gehäuseoberteil mit Scharniervorsprüngen am Unterteil angelenkt und gegen das Unterteil geklappt.

Gemäß der Erfindung sind am Gehäuseoberteil, kurz auch Oberteil genannt, senkrecht zu der durch die beiden Nuten aufgespannten Ebene verlaufende Zapfen angeformt, die sich beim Anklappen des Oberteils an das Unterteil gegen die obere Längskante des Schlitzes anlegen und so ein Verschieben des Unterteils und damit der Abdeckhaube senkrecht zur Längserstreckung der Längskanten verhindern.

Danach ist das Oberteil an dem Unterteil durch eine Plombierung festgelegt.

Weitere vorteilhafte Ausgestaltungen und Verbesserungen der Erfindung sind den weiteren Unteransprüchen zu entnehmen.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine Schnittansicht einer, in einer Abdeckung eingesetzten Abdeckhaube,
- Fig. 2: eine der Schnittansicht gemäß Fig. 1 entsprechende Schnittansicht im Bereich der Verrastung zwischen dem Unterteil und Oberteil
- Fig. 3a und 3b: je eine perspektivische Ansicht des Unterteils von unterschiedlichen Blickwinkeln aus,
- Fig. 4a: eine perspektivische Einsicht in das Oberteil,
- Fig. 4b: eine perspektivische Aufsicht auf das Oberteil von außen und
- Fig. 5: eine Darstellung, wie das Oberteil mit dem Unterteil verbunden wird, ebenfalls in perspektivischer Darstellung.

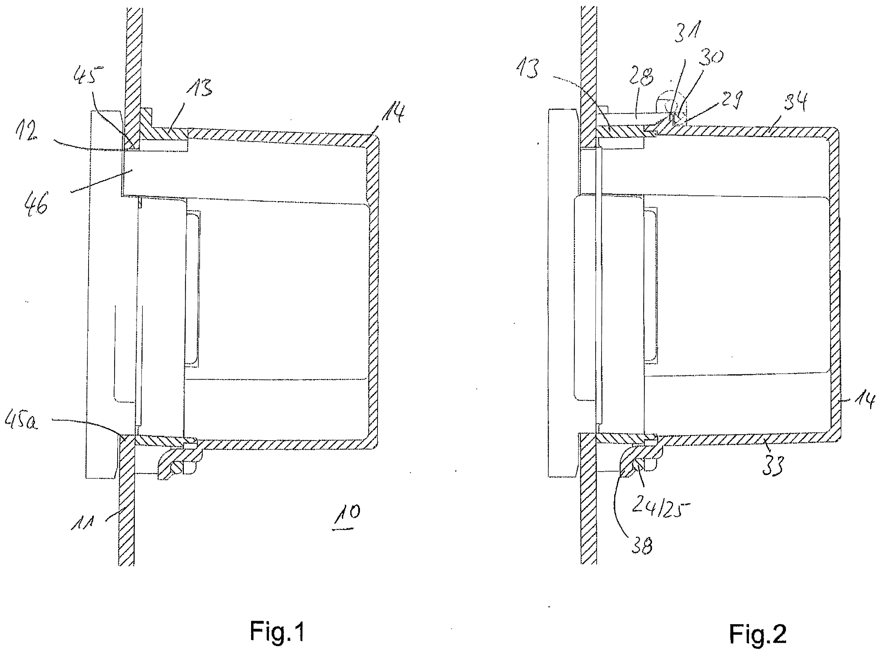

Es sei Bezug genommen auf die Figur 1.

Diese Fig. 1 zeigt eine Abdeckhaube 10, die zur Abdeckung einer nicht näher dargestellten Sicherung, eines Leitungsschutzschalters und/oder dergleichen, verwendet wird und die an einer Abdeckung 11 angebracht ist, die Teil einer Niederspannungs- Installationsschaltanlage oder eines Installationsverteilers ist. Die Abdeckung 11 verläuft innerhalb der Installationsverteilung vertikal. Innerhalb der Abdeckung 11 befindet sich ein senkrecht zur Zeichenebene verlaufender Schlitz 12, in den die Abdeckhaube 10 eingesetzt ist.

Die Abdeckhaube 10 ist aus einem Gehäuseunterteil 13, kurz auch Unterteil genannt, und einem Gehäuseoberteil 14, kurz auch Oberteil genannt, aufgebaut, welches Gehäuseoberteil 14 schwenkbar mit dem Gehäuseunterteil 13 verbunden ist, wie weiter unten näher dargestellt ist.

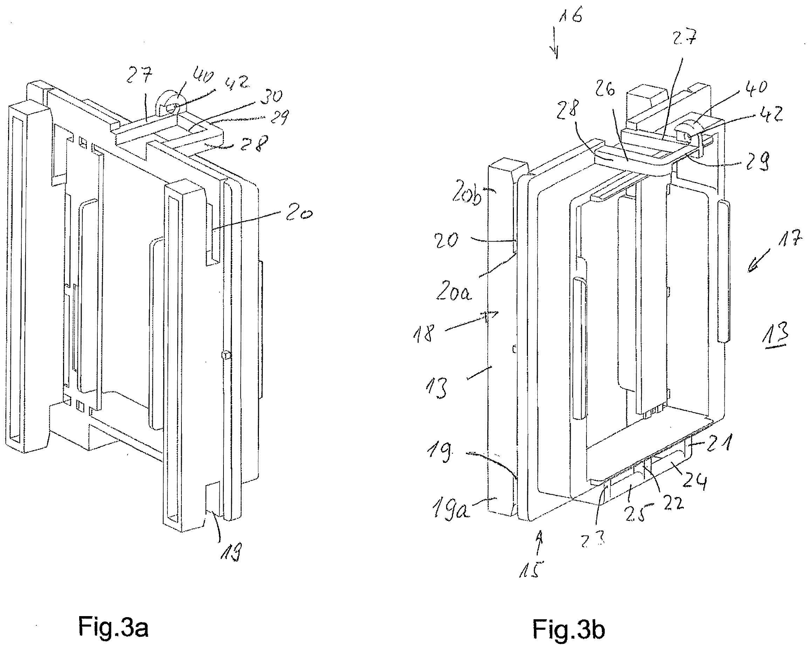

Es sei nun Bezug genommen auf Figuren 3a und 3b, in denen das Gehäuseunterteil 13 aus unterschiedlichen Blickwinkeln dargestellt ist.

Wie aus Fig. 3b ersichtlich ist, ist das Gehäuseunterteil als rechteckförmiger Rahmen ausgebildet, mit einer in der Fig. 3b vertikal unten befindlichen ersten Seitenwandung 15 und einer oben gezeichneten zweiten Seitenwandung 16, welche beide mit senkrecht dazu verlaufenden Seitenwänden 17 und 18 miteinander verbunden sind.

Die Seitenwandungen 15 und 16 besitzen Nuten 19 und 20, die parallel zu den Seitenwandungen 15 und 16 verlaufen und in entgegen gesetzte Richtungen offen sind.

An der ersten Seitenwandung 15 befinden sich Stützen 21 bis 23, die senkrecht zur ersten Seitenwandung 15 vorspringen und zwar in der Richtung, in der die Seitenwände 17, 18 sich erstrecken, und die zwischen sich je einen Achsabschnitt 24 und 25 tragen, dessen Aufgabe weiter unten dargestellt ist.

Auf der zweiten Seitenwandung 16 ist ein Vorsprung 26 geformt, der die durch die Seitenkanten der ersten und zweiten Seitenwandung 15, 16 und die Seitenwände 17 und 18 gebildeten Ebene überragt und senkrecht dazu vorspringt, wobei er von der durch die Nuten 19 und 20 gebildeten Ebene weg weist. Der Vorsprung 26 besitzt zwei parallel zueinander verlaufende Arme 27, 28, die durch einen parallel zu der Nutenebene verlaufenden Steg 29 an ihren Enden miteinander verbunden sind, wobei auf der Innenseite des Steges 29 eine Nase 30 angeformt ist, die im montierten Zustand hinter eine entsprechende Rastnase 31, siehe Fig. 2, des Gehäuseoberteils 14 greift beziehungsweise diese überragt.

Die Nase 30, die aus der Fig. 2 ersichtlich ist, ist in der Figur 3b und damit auch in der Fig. 3a nicht ersichtlich, weil sie durch den Steg 29 überdeckt ist.

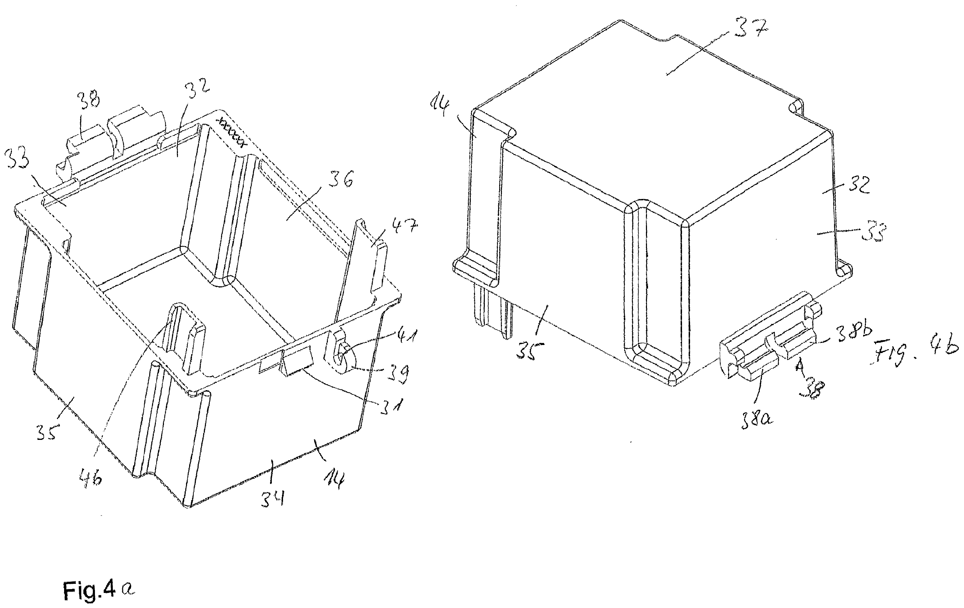

Das Gehäuseoberteil 14, welches die Figuren 4a und 4b jeweils in perspektivischer Darstellung zeigen, wobei die Fig. 4a eine Einsicht in das Gehäuseoberteil 14 und die Fig. 4b eine Aufsicht auf die Außenseite des Gehäuses 14 mit den Außenflächen der Seitenwände 33, 35 und der Bodenwand 37 ist, ist ein rechteckiges, topfförmiges Gehäuse 32 mit den Seitenwänden 33, 34, 35 und 36. An einer Längskante der Seitenwände 33 bis 36 ist ein Haubenboden 37 angeformt, der das Oberteil zu einem quaderförmigen Topf ergänzt.

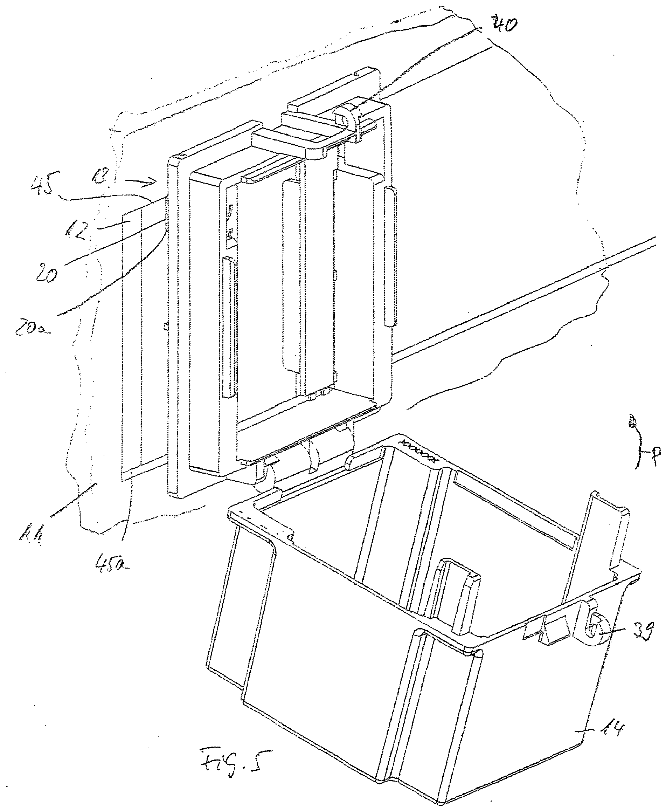

An der Außenfläche der Seitenwand 33 befindet sich ein Scharniergelenkvorsprung 38, der zwei Teilabschnitte 38a, 38b aufweist, die an die Achsabschnitte 24, 25 angepasst wird. Diese Teilabschnitte 38a, 38b greifen im montierten Zustand hinter die Achsabschnitte 24 und 25, so dass auf diese Weise das Oberteil 32 mit dem Unterteil 13 verbunden werden kann, indem das Oberteil 22 mit der offenen Seite gegen das Unterteil 13 gesetzt wird, wobei der Scharniergelenkvorsprung 38 hinter die Achsabschnitte oder Zapfen 24 und 25 greift, wie aus Fig. 2 und Fig. 5 hervorgeht. Die Fig. 2 zeigt eine Schnittansicht durch die Scharniergelenkverbindung mit dem Scharniergelenkvorsprung 38 und den Achsabschnitten 24/25, wogegen die Fig. 5 die Stellung zeigt, in der das Gehäuseoberteil 14 mit dem Gehäuseunterteil 13 über die Scharniergelenkverbindung 24/25/38 verbunden ist; das Gehäuseoberteil 14 ist dabei in abgeklappter Stellung zu sehen, aus der es in Pfeilrichtung P gegen das Gehäuseunterteil 13 angeklappt werden kann.

Auf der entgegengesetzt liegenden Außenseite der Seitenwandung 34 ist die oben schon erwähnte Nase 31 sowie eine Auge 39 angeformt, welches dann, wenn das Gehäuseoberteil 14 um die Drehachsen 24, 25/38 verschwenkt wird, auf ein Auge 40 auf der Außenfläche des Armes 27 gelangt, so dass das Auge 39 mit dem entsprechenden Auge 40 am Gehäuseunterteil 13 fluchtet. Das Auge 39 besitzt, eine parallel zum Steg 29 verlaufende Öffnung 41, ebenso wie das Auge 40 eine in gleiche Richtung verlaufende Öffnung 42, durch die eine Plombierelement durchgesteckt beziehungsweise hindurchgeführt werden kann; wenn das Gehäuseoberteil 14 entsprechend Pfeilrichtung P (siehe Fig. 5) an das Gehäuseunterteil 13 angeklappt wird, werden die beiden Augen 39 und 40 miteinander fluchten, so dass auch die Öffnungen 41 und 42 miteinander fluchten; damit ist die Plombierung möglich.

Wenn das Gehäuseoberteil 14 um die Achse 24, 25/38 geschwenkt wird, verrastet die Nase 31 hinter der Rastnase 30 zwischen den beiden Armen 27 und 28.

Wenn nun die Abdeckhaube 10 an der Abdeckung 11 montiert werden soll, dann wird das Unterteil ohne Oberteil mit der Nut 20 hinter die vertikal obere Längskante 45 des Schlitzes 12 der Abdeckung 11 eingesetzt und zwar soweit, dass die Längskante 45 vollständig in die Nut 20 eingreift. Zu diesem Zweck ist der Abstand zwischen dem Nutgrund 20a der Nut 20 und dem freien Ende des Nutschenkels 19a der Nut 19 so gewählt, dass er kleiner ist als der Abstand der Längskanten 45, 45a des Schlitzes 12 der Abdeckung 11. Nach Einsetzen der Nut 20 hinter die Längskante 45 wird das Gehäuseunterteil 13 gegen die Abdeckung geschwenkt, wobei die Schwenkachse für das Gehäuseunterteil 13 der Nutgrund 20a ist. Die Verschwenkung ist dann beendet, wenn die Nut 19 über der Kante 45a liegt, so dass dann das Gehäuseunterteil 13 mit dem Nutgrund der Nut 19 oberhalb der Kante 45a zu liegen kommt. Sodann wird das Gehäuseunterteil 13 vertikal nach unten verschoben, bis der Nutgrund der Nut 19 gegen die Kante 45a des Schlitzes zu liegen kommt. In dieser Stellung verbleibt das Gehäuseunterteil 13 aufgrund seiner Schwerkraft und ist gegen ein Herausfallen des Gehäuseunterteils 13 durch die freie Nutwand 20b gesichert.

Im Bereich der Ecken der Seitenwandungen 34, 35 bzw. 34, 36, an den Seitenwandungen 35, 36 nahe der Seitenwand 34, an der sich das Auge 39 befindet, besitzt das Gehäuseoberteil 14 Sicherungsstege 46, 47, die senkrecht zu der durch die Endkanten der Seitenwände 33, 34, 35 und 36 gebildeten Ebene nach außen, bezogen auf das Gehäuseoberteil 14, vorspringen und die dann in den Zwischenraum zwischen den durch den Nutgrund 20a der Nut 20 und der Längskante 45 gebildet ist, so dass auf diese Weise ein Verschieben der Abdeckhaube parallel zur Abdeckung 11 und senkrecht zur Längserstreckung des Schlitzes 12 nicht mehr möglich ist.

## Patentansprüche

1. Abdeckhaube (10) für wenigstens ein elektrisches Sicherungsgerät, Leitungsschutzschalter und/oder dergleichen in einer elektrischen Niederspannungsschaltanlage, insbesondere in einem Installationsverteiler,
welche Abdeckhaube (10) in einen parallel zueinander und horizontal verlaufenden Längskanten (45, 45a) aufweisenden Schlitz (12) einer Abdeckwand (11) einsetzbar ist, wobei die Abdeckhaube (10) ein am Schlitz (12) festlegbares Gehäuseunterteil (13) und ein daran angebrachtes Gehäuseoberteil (14) aufweist, welches an einer ersten Seite mittels eines Scharniergelenks (24, 25, 38) am Gehäuseunterteil (13) anbringbar ist und an der gegenüberliegenden zweiten Seite verplombbar festlegbar ist, wobei das Gehäuseunterteil (13) an der Außenseite zweier parallel zueinander und im eingebauten Zustand horizontal verlaufender Seitenwandungen je eine die Seitenwandungen überdeckende, in entgegen gesetzte Richtungen offene und parallel zu den freien Endkanten der Seitenwandungen verlaufende Nut (19, 20) aufweist, in die die Längskanten (45, 45a) des Schlitzes (12) im montierten Zustand der Abdeckhaube zumindest teilweise eingreifen, **dadurch gekennzeichnet, dass** die vertikal oben befindliche Längskante (45) des Schlitzes (12) im montierten Zustand nur teilweise in die dazugehörige Nut (20) am Gehäuseunterteil (13) eingreift und dass am Gehäuseoberteil (14) wenigstens eine senkrecht zu der durch die beiden Nuten aufgespannten Ebene verlaufender, die freien Kanten des Gehäuseoberteils überragende Zapfen (46, 47) angeformt ist, die sich im montierten Zustand gegen die obere Längskante (45) des Schlitzes (12) anlegen und so ein Verschieben des Gehäuseunterteils (13) und damit der Abdeckhaube (10) senkrecht zur Längserstreckung der Seitenkanten verhindern.

2. Abdeckhaube nach Anspruch 1, **dadurch gekennzeichnet, dass** der Abstand des Nutgrundes (20a) der Nut (20) an der zweiten Seitenwandung (16) vom freien Rand des Nutschenkels (19a) der Nut (19) an der ersten Seitenwandung (15) kleiner ist als der Abstand der Längskanten (45, 45a) des Schlitzes (12).

3. Abdeckhaube nach Anspruch 2, **dadurch gekennzeichnet, dass** im in der Abdeckung (11) eingebauten Zustand die vertikal unten liegende Längskante des Schlitzes vollständig in die Nut (19) an der ersten Seitenwandung (15) des Gehäuseunterteils (13) eingreift.

4. Abdeckhaube nach einem der vorherigen Ansprüche, **dadurch gekennzeichnet, dass** am Gehäuseoberteil (14) ein Scharniergelenkvorsprung (38) vorgesehen ist, der hinter am Gehäuseunterteil (13) angebrachte Achsabschnitte (24, 25) einhängbar ist, so dass hierdurch eine Scharniergelenkverbindung zwischen dem Gehäuseoberteil (14) und dem Gehäuseunterteil (13) erzeugt ist.

5. Abdeckhaube nach Anspruch 4, **dadurch gekennzeichnet, dass** die Scharniergelenkverbindung (24, 25; 38) im montierten Zustand an der vertikal unteren Wandung der Abdeckhaube (10) angebracht ist.

6. Abdeckhaube nach einem der vorherigen Ansprüche, **dadurch gekennzeichnet, dass** am Gehäuseoberteil (14) an der Seitenwand (34), die derjenigen Seitenwand (33) mit den Scharniergelenkvorsprung (38) entgegengesetzt liegt, im Bereich der freien Seitenkanten des Gehäuseoberteils (14) eine nach außen vorspringende Rastnase (31) vorgesehen ist, die hinter eine Nase (30) am Gehäuseunterteil (13) rastbar ist.

7. Abdeckhaube nach Anspruch 6, **dadurch gekennzeichnet, dass** am Gehäuseunterteil wenigstens ein Arm (27, 28) senkrecht zu der durch die Abdeckung (11) verlaufenden Ebene angeformt sind, an dem ein senkrecht zu dem Arm (27, 28) verlaufender Steg (29) angeschlossen ist, an dem die Nase (30) angeformt ist

8. Abdeckhaube nach einem der vorherigen Ansprüche, **dadurch gekennzeichnet, dass** im Bereich der Rastnase (31) an der Außenfläche der Seitenwandung (34) ein Auge (39) angeformt ist, dem ein Auge an einem der Arme (28, 27) entspricht, wobei beide Augen Durchgangsöffnungen (41, 42) aufweisen, durch die ein Plombierelement hindurchsteckbar ist.

## Claims

1. Covering hood (10) for at least one electrical fuse device, circuit breaker and/or the like in an electrical low-voltage switchgear assembly, in particular in a service distribution board, which covering hood (10) can be inserted into a slot (12) in a covering wall (11), which slot has longitudinal edges (45, 45a) which run parallel in relation to one another and horizontally, wherein the covering hood (10) has a housing lower part (13), which can be secured to the slot (12), and a housing upper part (14) which is fitted to the said housing lower part and which can be fitted to the housing lower part (13) on a first side by means of a hinge joint (24, 25, 38) and can be fastened in a lead-sealed manner to the opposite second side, wherein the housing lower part (13) has, on the outside of two side walls which run parallel in relation to one another and horizontally in the installed state, in each case one groove (19, 20) which covers the side walls, is open in opposite directions and runs parallel in relation to the free end edges of the side walls and into which the longitudinal edges (45, 45a) of the slot (12) at least partially engage in the mounted state of the covering hood, **characterized in that** the longitudinal edge (45) of the slot (12) which is located vertically at the top engages only partially into the associated groove (20) on the housing lower part (13) in the mounted state, and **in that** at least one pin (46, 47) which runs perpendicular to the plane which is spanned by the two grooves and which projects beyond the free edges of the housing upper part is integrally formed on the housing upper part (14), the said pins resting against the top longitudinal edge (45) of the slot (12) in the mounted state and thereby preventing displacement of the housing lower part (13) and therefore of the covering hood (10) perpendicular to the longitudinal extent of the side edges.

2. Covering hood according to Claim 1, **characterized in that** the distance of the groove base (20a) of the groove (20) on the second side wall (16) from the free border of the groove limb (19a) of the groove (19) on the first side wall (15) is smaller than the distance between the longitudinal edges (45, 45a) of the slot (12).

3. Covering hood according to Claim 2, **characterized in that**, in the state in which it is installed in the cover (11), the longitudinal edge of the slot which is situated vertically at the bottom engages fully into the groove (19) on the first side wall (15) of the housing lower part (13).

4. Covering hood according to one of the preceding claims, **characterized in that** a hinge joint projection (38) is provided on the housing upper part (14), it being possible for the said hinge joint projection to be suspended behind axle sections (24, 25) which are fitted to the housing lower part (13), so that a hinge joint connection between the housing upper part (14) and the housing lower part (13) is produced in this way.

5. Covering hood according to Claim 4, **characterized in that** the hinge joint connection (24, 25; 38) is fitted to the vertically lower wall of the covering hood (10) in the mounted state.

6. Covering hood according to one of the preceding claims, **characterized in that** an outwardly projecting latching lug (31) which can latch behind a lug (30) on the housing lower part (13) is provided on the housing upper part (14) on the side wall (34) which is situated opposite that side wall (33) with the hinge joint projection (38), in the region of the free side edges of the housing upper part (14).

7. Covering hood according to Claim 6, **characterized in that** at least one arm (27, 28) is integrally formed on the housing lower part perpendicular to the plane which runs through the cover (11), a web (29) which runs perpendicular to the arm (27, 28) and on which the lug (30) is integrally formed being connected to the said arm.

8. Covering hood according to one of the preceding claims, **characterized in that** an eye (39) is integrally formed on the outer surface of the side wall (34) in the region of the latching lug (31), and an eye on one of the arms (28, 27) corresponds to the said eye, wherein the two eyes have passage openings (41, 42) through which a lead-sealing element can be passed.

## Revendications

1. Capot de recouvrement (10) destiné à au moins un appareil de sécurité, à un disjoncteur de protection de ligne et/ou à un dispositif de ce type dans une installation de distribution électrique à basse tension, en particulier dans un tableau de répartition, lequel capot de recouvrement (10) peut être utilisé dans une fente (12) présentant des bords longitudinaux (45, 45a) s'étendant parallèlement l'un à l'autre et horizontalement d'une paroi de recouvrement (11), dans lequel le capot de recouvrement (10) comporte une partie inférieure de boîtier (13) pouvant être fixée à la fente (12) et une partie supérieure de boîtier (14) pouvant être montée sur celle-ci, laquelle partie supérieure de boîtier peut être montée sur une première face au niveau de la partie inférieure de boîtier (13) au moyen d'une articulation à charnière (24, 25, 38), et peut être fixée à la deuxième face opposée, dans lequel la partie inférieure de boîtier (13) comporte sur les faces extérieures de deux parois latérales s'étendant parallèlement l'une à l'autre et horizontalement dans un état encastré une encoche (19, 20) respective recouvrant les parois latérales, ouverte dans des directions opposées et s'étendant parallèlement aux bords d'extrémité libres des parois latérales, encoche dans laquelle les bords longitudinaux (45, 45a) de la fente (12), à l'état monté du capot de recouvrement, s'engagent au moins partiellement, **caractérisé en ce que** les bords longitudinaux (45) situés verticalement vers le haut de la fente (12), à l'état monté, ne s'engagent que partiellement dans l'encoche correspondante (20) sur la partie inférieure de boîtier (30) et **en ce que**, sur la partie supérieure de boîtier (14), est façonnée au moins une broche (46, 47) s'étendant perpendiculairement au plan passant par les deux encoches, et faisant saillie par rapport aux bords libres de la partie supérieure de boîtier, lesquelles broches s'appliquent, à l'état monté, contre le bord longitudinal supérieur (45) de la fente (12) et empêchent ainsi un décalage de la partie inférieure de boîtier (13) et par conséquent, du capot de recouvrement (10) perpendiculairement à l'extension longitudinale des bords latéraux.

2. Capot de recouvrement selon la revendication 1, **caractérisé en ce que** l'espacement du fond d'encoche (20a) de l'encoche (20) au niveau de la deuxième paroi latérale (16) par rapport à un bord libre de la partie d'encoche (19a) de l'encoche (19) au niveau de la première paroi latérale (15) est inférieur à l'espacement des bords longitudinaux (45, 45a) de la fente (12).

3. Capot de recouvrement selon la revendication 2, **caractérisé en ce que**, à l'état incorporé au capot (11), le bord longitudinal situé verticalement vers le bas de la fente s'engage entièrement dans l'encoche (19) sur la première paroi latérale (15) de la partie inférieure de boîtier (13).

4. Capot de recouvrement selon l'une quelconque des revendications précédentes, **caractérisé en ce qu'**il est prévu sur la partie supérieure de boîtier (15) une protubérance d'articulation de charnière (38) qui peut être accrochée à l'arrière de partie d'axe (24, 25) montée sur la partie inférieure de boîtier (13) de manière à ce qu'une liaison par articulation de charnière entre la partie supérieure de boîtier (14) et la partie inférieure de boîtier (13) puisse être réalisée par l'intermédiaire de celle-ci.

5. Capot de recouvrement selon la revendication 4, **caractérisé en ce que** la liaison par articulation de charnière (24, 25 ; 38), à l'état monté, peut être montée sur la paroi verticale inférieure du capot de recouvrement (10).

6. Capot de recouvrement selon l'une quelconque des revendications précédentes, **caractérisé en ce qu'**il est prévu sur la partie supérieure de boîtier (14) au niveau de la paroi latérale (34) qui est opposée à la paroi latérale (33) présentant la protubérance d'articulation de charnière (38), dans la zone des bords latéraux libres de la partie supérieure de boîtier (14), un ergot d'encliquetage (31) faisant saillie vers l'extérieur, qui peut être encliqueté dans un ergot (30) prévu sur la partie inférieure de boîtier (13).

7. Capot de recouvrement selon la revendication 6, **caractérisé en ce que**, sur la partie inférieure de boîtier, est façonné au moins un bras (27, 28) perpendiculairement au plan passant par le capot (11), auquel est reliée une barre (29) s'étendant perpendiculairement au bras (27, 28) sur lequel est façonné l'ergot (30).

8. Capot de recouvrement selon l'une quelconque des revendications précédentes, **caractérisé en ce que**, dans la zone de l'ergot d'encliquetage (31), sur la surface extérieure de la paroi latérale (34), est façonné un oeilleton (39) auquel correspond un oeilleton formé sur l'un des bras (28, 27), dans lequel les deux oeilletons présentent des ouvertures traversantes (41, 42) à travers lesquelles peut être inséré un élément de plombage.
